(19) Europäisches Patentamt / European Patent Office / Office européen des brevets

(11) **EP 3 862 623 B1**

(12) **EUROPEAN PATENT SPECIFICATION**

(45) Date of publication and mention of the grant of the patent:
**02.11.2022 Bulletin 2022/44**

(21) Application number: **20156289.9**

(22) Date of filing: **10.02.2020**

(51) International Patent Classification (IPC):
**F21S 41/141** *(2018.01)* **F21S 41/25** *(2018.01)*

(52) Cooperative Patent Classification (CPC):
**F21S 41/143; F21S 41/153; F21S 41/275; G02B 3/0012; G02B 3/04**

(54) **IMAGING LENS FOR USE IN A LIGHT MODULE FOR A VEHICLE HEADLAMP, LIGHT MODULE, AND VEHICLE HEADLAMP**

ABBILDUNGSLINSE ZUR VERWENDUNG IN EINEM LICHTMODUL FÜR EINEN FAHRZEUGSCHEINWERFER, LICHTMODUL UND FAHRZEUGSCHEINWERFER

LENTILLE D'IMAGERIE DESTINÉ À ÊTRE UTILISÉ DANS UN MODULE D'ÉCLAIRAGE D'UN PHARE DE VÉHICULE, MODULE D'ÉCLAIRAGE ET PHARE DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.08.2021 Bulletin 2021/32**

(73) Proprietor: **Lumileds LLC**
**San Jose, CA 95131 (US)**

(72) Inventor: **ZOZGORNIK, Steffen**
**52068 Aachen (DE)**

(74) Representative: **Cohausz & Florack**
**Patent- & Rechtsanwälte**
**Partnerschaftsgesellschaft mbB**
**Bleichstraße 14**
**40211 Düsseldorf (DE)**

(56) References cited:
**EP-A1- 3 299 698       US-A1- 2014 009 938**
**US-A1- 2016 025 290       US-B2- 10 400 972**

**Description**

FIELD OF THE INVENTION

The invention relates in general to vehicle headlamps and, more particularly, to an imaging lens for use in a light module for a vehicle headlamp. The invention further relates to a light module for a vehicle headlamp comprising the imaging lens and to a vehicle headlamp comprising such a light module.

BACKGROUND OF THE INVENTION

Light emitting diodes (LEDs) are rapidly gaining popularity because of their longevity and low energy credentials. Advances in manufacturing have led to the emergence of chip-sized LED packages or modules in which at least one LED, and typically a plurality of LEDs are packaged together, e.g. like a matrix comprising one or more rows, wherein in each row a plurality of LEDs is arranged, and are presented as a single die. Such packages are therefore sometimes referred to as single die emitters (SDE) or micro LED arrays (MLA). Due to the Lambertian luminous distribution and brightness produced by such packages, they are considered a key enabler of LED-based solutions in a number of application domains, including automotive lighting and projection lighting.

Such LED modules typically produce a Lambertian luminous distribution centred about an optical axis of the package. In some application domains including but not limited to automotive front lighting, e.g. automotive headlamps, the use of such packages must therefore be combined with additional optical elements in order to reshape and redirect the luminous distribution in the desired direction, often to comply with the appropriate regulations concerning allowable beam profiles generated by different types of headlamps, e.g. full beams, dipped or low beams, and so on.

In many headlamps and other lighting devices a lens is used to image a light distribution generated by a light source (e.g. a LED matrix) into the far field. Any inhomogeneity or intensity structure produced by the light source will be projected and reproduced in the far field. Especially, this is a problem in matrix systems where gaps between the individual LEDs or pixels of the light source are imaged as black lines in the far field.

Simply defocussing the imaging system (i.e. light source in relation to the imaging lens/es) in order to deliberately blur the image is not productive, because the amount of blur strongly depends on the geometrical tolerances of the imaging system in this case, e.g. on the distance between the light source and the imaging lens(es), and thus is varying strongly.

So far, in order to blend light inhomogeneities or light intensity structures, commonly a scattering surface is used. This is added to an element in the beam path, most likely it is applied to a lens surface of the imaging system. For example, US 9,476,558 B2 refers to such a scattering surface or diffusion structure being applied to a light exit surface of a projection lens for use in an LED module for a motor vehicle headlamp.

Adding a diffusion structure to a surface of a projection/imaging lens is an additional step in the toolmaking of the lens. Furthermore, it is not applicable in all cases. Moreover, it may affect the appearance of the surface (less smooth and shiny) the diffusion structure is applied to.

Accordingly, there is a need for an imaging lens, a light module, and a vehicle headlamp which are distinguished by an improved performance, where performance is assessed on the qualities of illumination homogeneity, installation ease and set-up time, and manufacturing ease and cost.

US 2016/0025290 discloses a headlamp for a vehicle comprising a number of semiconductor-based light sources arranged on a substrate, and an optical unit having a lens. The lens face is calculated by means of a conic section equation completed by two deformation parameters.

SUMMARY OF THE INVENTION

It is an object of the present invention to provide an imaging lens for use in a light module for a vehicle headlamp, the light module for the vehicle headlamp comprising the imaging lens, and the vehicle headlamp comprising the light module having the imaging lens, which provide improved illumination/light intensity homogeneity in the far field, improved installation ease and reduced installation set-up time, and improved manufacturing ease and cost.

The invention is defined by the independent claims. The dependent claims define advantageous embodiments.

According to a first aspect, an imaging lens for use in a light module for a vehicle headlamp is provided comprising a light entry surface and a light exit surface, wherein the light entry and exit surfaces are configured and arranged such as to project light entering the light entry surface and exiting the light exit surface to a far field in order to generate a predefined light intensity distribution in the far field.

In general, the far field of the light is considered a field in space comparatively (i.e. in relation to the geometric dimensions of the imaging lens itself) far away from the imaging lens, e.g. at least several few meters up to several 10 meters, e.g. about 25 meters, or even 100 meters.

Further according to the invention, one or more of the light entry surface and the light exit surface comprise an aspheric surface which curvature is defined by an overlay of a conic section plus at least one correction polynomial of at least second order or higher, wherein the correction polynomial describes a waveform, i.e. the correction polynomial defines an undulating mathematical function having at least two maxima and at least one minimum or at least two minima and at least one maximum.

A conic section is to be understood a curve obtained as the intersection of the surface of a cone with a plane. The three types of a conic section are the hyperbola, the parabola, and the ellipse, wherein the circle is a special case of the ellipse.

In general, the correction polynomial (also generally referred to as a polynomial or polynomial function hereinafter) is an expression consisting of variables and coefficients that involves only the operations of addition, subtraction, multiplication, and non-negative integer exponents of the variables. For example, the correction polynomial in a single variable $x$ of $n$-th order can be written in the form:

$$C(x) = c_0 + c_1 x + c_2 x^2 + \ldots + c_{n-1} x^{n-1} + c_n x^n,$$

where $c_0, \ldots, c_n$ are constants (i.e. coefficients of the correction polynomial $C$) and $x$ is the variable.

Furthermore, in terms of the present invention, it is to be understood that the waveform of the polynomial function is a continuous waveform having at least one inflection point, i.e. at the inflection point the polynomial function changes its curvature, e.g. from convex to concave and vice versa. In terms of the present invention, *concave* may indicate a curvature that is directed towards an inside or interior of a lens body forming the imaging lens. Hence, a *convex* curvature may be a curvature which is directed towards an exterior or outside of the lens body/imaging lens.

Thus, according to the invention, the curvature of the aspheric surface is at least a combination or an overlay of an elementary form of the surface which is described as a conic section, e.g. a parabola, plus the undulating function given by the correction polynomial resulting in an overall undulating aspheric surface of one or more of the light entry surface and the light exit surface of the imaging lens. Thereby, the imaging lens according to the invention projects the light passing through the light entry and exit surfaces with a controlled and well-defined blur angle to the far field irrespective of geometrical tolerances of an imaging system, e.g. a distance between a light source generating light and the imaging lens. Consequently, a rather smooth light intensity distribution is achieved in the far field.

For example, if a plurality of individual light sources, e.g. LEDs, is used to generate the light entering the light entry surface and exiting the light exit surface of the imaging lens according to the invention, the imaging lens creates a controlled blurred image of the individual light sources in the far field, thus blending the illumination of different individual LEDs and thereby yielding quite a homogeneous overall illumination in the far field.

Particularly, the blur of the individual light sources, e.g. a plurality of individual LEDs, is controlled by the imaging lens such that potential gaps resulting from an arrangement of neighbouring individual light sources (e.g. as with an LED matrix arrangement) essentially disappear in the far field. Without the blur induced by the imaging lens according to the invention, gaps (from which no light is emitted) between individual light sources would cause the light intensity distribution in the far field to vary significantly thus rendering the illumination in the far field visibly inhomogeneous, i.e. the gaps would be imaged as rather dark lines, discs, rectangles and the like in the far field. Moreover, the blur to be generated by the imaging lens according to the invention preferably provides an essentially rectangular illumination distribution in the far field facilitating the desired homogeneous intensity distribution.

Using a conventional imaging lens having precise imaging characteristics, a blurred image of an object may be achieved only by varying the geometrical distance between the object to be projected, e.g. a light source, and the light entry surface of the conventional imaging lens, e.g. placing the object offset with regard to a focal plane of the conventional imaging lens. However, in this case, the blurred image remains highly dependent on the geometrical tolerances of such an arrangement rendering the installation process and installation set-up time quite intricate. Moreover, a well-controlled blur of the image is almost impossible to define using the conventional (i.e. precisely/accurately imaging) imaging lens since the boundaries of the blurred image are not definable in a well-reproducible manner.

On the contrary, the imaging lens according to the invention can be defined to provide a well-controlled blur angle an imaged object will have in an imaging plane (e.g. the far field). This highly alleviates the installation process and greatly reduces set-up time as the optimal geometrical displacement between the imaging lens according to the invention and the object to be imaged, e.g. one or more light sources such as a plurality of individual LEDs for example, may be defined by simply determining the tightest possible blur (i.e. the most precise image possible to be achieved with the imaging lens in the selected imaging plane) of the imaged object for a given imaging distance, yet still achieving the desired homogeneous light intensity distribution in the imaging plane/far field.

Furthermore, already established manufacturing processes for the manufacture of conventional imaging lenses, in particular conventional aspheric lenses, may advantageously continue to be used for the manufacturing of the imaging lens according to the invention. To this end, only the coefficients $c_0, \ldots, c_n$ of the correction polynomial as mentioned above will have to be passed to the manufacturing process. These coefficients may simply be added to respective coefficients of an additional polynomial function already being used to describe a conventional aspheric surface of an imaging lens, thus greatly improving manufacturing ease and cost.

According to advantageous embodiments of the invention, the overlay to define the curvature of the aspheric surface comprises an additional polynomial besides the conic section and the at least one correction polynomial. In this case, the elementary (conventional) aspheric surface is defined as the overlay of the conic section plus the additional polynomial. This elementary form of the aspheric surface is then combined with the correction polynomial as described above.

Generally, similar to the correction polynomial above, the additional polynomial in a single variable $x$ of $n$-th order can be written in the form:

$$P(x) = a_0 + a_1 x + a_2 x^2 + \dots + a_{n-1} x^{n-1} + a_n x^n,$$

where $a_0, \dots, a_n$ are the coefficients of the additional polynomial $P$ and $x$ is the variable.

As already mentioned above, conventional manufacturing processes for conventional aspheric lenses may continue to be used straightforwardly, namely by simply adding only the coefficients $c_0, \dots, c_n$ of the correction polynomial to the respective coefficients $a_0, \dots, a_n$ of the additional polynomial in order to yield a combined polynomial $Q$ in the form:

$$Q(x) = (a_0 + c_0) + (a_1 + c_1)x + (a_2 + c_2)x^2 + \dots + (a_{n-1} + c_{n-1})x^{n-1} + (a_n + c_n)x^n,$$

where $(a_0 + c_0), \dots, (a_n + c_n)$ are the combined coefficients of the additional polynomial $P$ and the correction polynomial $C$.

Thus, in this case, the overall curvature of the aspheric surface is described as the overlay of the conic section, the additional polynomial and the correction polynomial.

According to further advantageous embodiments of the invention, the correction polynomial only comprises even-numbered orders, thus rendering the waveform defined by the correction polynomial axisymmetric and therefore yielding further improvements with respect to manufacturing ease and cost as, for example, a rotationally symmetrical imaging lens may be manufactured by simple machining, in particular, by lathing.

Yet further according to embodiments of the invention, the curvature of the aspheric surface does not have any inflection point. In other words, though the waveform defined by the correction polynomial itself does have at least one inflection point (due to the definition of undulation set forth above), the overlay of the elementary form, i.e. the conic section, of the aspheric surface plus the waveform defined by the at least one correction polynomial according to the invention does not have any inflection point anymore. Again, this also yields improvements regarding manufacturing ease and cost of the imaging lens according to the invention as simple machining may be applied without having to take account of undercuts and the like, for example.

Still further, the aspheric surface may define a blur angle being in the range from 0.5° to 3°. Such blur angles have the advantage that a well-defined scalability of the parameters of the aspheric surface according to the invention (in particular the coefficients of the correction polynomial) may be obtained. In other words, the coefficients of the correction polynomial may be determined once for a given diameter of the aspheric surface and lens, respectively, a given blur angle, and a refractive index of the material forming the imaging lens. Thereafter, the correction polynomial may be scaled to other diameters und different blur angles and refractive indices essentially using only basic arithmetic operations.

In order to further improve manufacturing ease and cost, the aspheric surface may be a rotationally symmetrical surface. Then, only one correction polynomial can be used to define the desired undulation of the aspheric surface, wherein, advantageously, the correction polynomial can be defined as a function of a single variable, namely a radius, of the aspheric surface. As only one single polynomial function is needed to define the undulating curvature of the aspheric surface, only one set of respective coefficients is to be determined and fed to the manufacturing process. Furthermore, lathing can be used as a simple machining method for the manufacture of the imaging lens according to the invention.

According to other embodiments of the invention, the aspheric surface may be a non-rotationally symmetrical surface. In this case, preferably two correction polynomials may be used to describe the undulating curvature of the aspheric surface according to the invention in two spatial dimensions. One of the two polynomials may be a function of a first spatial direction (e.g. variable x) and the other polynomial may be a function of a second spatial direction (e.g. variable y), the second spatial direction being perpendicular to the first spatial direction.

It is to be noted that the corresponding coefficients for each of the two correction polynomials may be identical, thus resulting in similar or identical imaging characteristics (e.g. blur angle) for both the first and the second spatial directions.

However, the corresponding coefficients for both the first and second correction polynomials may also be different, facilitating different imaging characteristics (e.g. blur angles) for the first spatial direction (e.g. a horizontal spatial direction) and the second spatial direction (e.g. a vertical spatial direction). Thus, the light intensity distribution achieved in the far field by the imaging lens according to the invention may be advantageously more flexibly adapted to specific application requirements.

It is to be understood that, while two independent correction polynomials are described above, one 2-dimensional polynomial being a function of both the first and second spatial directions (e.g. $x$ and $y$) may be used as well.

While rotationally symmetrical aspheric surfaces according to embodiments of the invention as mentioned above are particularly advantageous in order to achieve a homogenous light intensity distribution with regard to primarily disc-shaped or circular-bounded projected areas, non-rotationally symmetrical aspheric surfaces may be advantageously employed in circumstances in which a homogeneous illumination of rather rectangular or elliptical projected areas is sought.

Regarding yet further advantageous embodiments of the invention, the maximum order of the correction polynomial may be limited to 16. It has been found that correction polynomials of 16-th order max. are particularly advantageous because, on the one hand, they are capable of providing sufficient precision to define the shape of the undulation necessary to achieve the desired blur (blur angle) of an imaged object, e.g. a LED light source, in the far field, and, on the other hand, they facilitate cost-effective manufacturing of the imaging lens according to the invention since the manufacturing of the imaging lens according to these embodiments can be seamlessly integrated into already existing manufacturing processes for conventional aspheric lenses without requiring any - or at most little -adaptations of already existing processes.

According to a second aspect of the invention, a light module for a vehicle headlamp is provided, comprising an LED light source for generating light, the LED light source comprising an LED array having a plurality of LEDs, and at least one imaging lens being configured and arranged to generate an image of the plurality of LEDs in a far field of the light generated by the LED light source, wherein the imaging lens is configured according to any of the embodiments according to the invention disclosed herein. It is to be noted that the imaging lens is disposed within the light module such that the light entry surface of the imaging lens faces the LED light source and the light exit surface is oriented towards the far field of the LED light source to be imaged by the imaging lens.

The LED array may be in the form of an LED matrix comprising a plurality of adjoining LED rows with each LED row having a plurality of adjoining LEDs arranged therein. For example, the LED array may comprise 3 to 5 rows with each row comprising 20 to 40 LEDs, without being limited thereto. Hence, 2 rows of LEDs or more than 5 rows of LEDs, e.g. 6, 7, 8 or still more rows of LEDs, may be provided. Also, less than 20 LEDs per row or more than 40 LEDs per row may be provided, e.g. 80 individual LEDs per row.

Moreover, the LED array may be a micro LED array, i.e. a LED array having the plurality of individual LEDs arranged in very close proximity to each other (e.g. arranged on the same semiconductor substrate), i.e. almost or even abutting each other. The micro LED array facilitates a highly compact design of the light module along with a high overall output efficiency of the LED light source. In such a case, i.e. if a micro LED array is used as the LED array, the number of LEDs arranged in one row and/or the number of rows may even attain 10 times the numbers given above.

In any case of the above-described LED arrays, the blur/blur angle provided by the imaging lens according to the invention is particularly chosen such that possible gaps between adjacently arranged LEDs resulting from their matrix arrangement are essentially blended in the far field, thus rendering the light intensity distribution to be rather homogeneous in the far field.

According to a third aspect of the invention, a vehicle headlamp comprising a light module in accordance with any of the embodiments according to the invention disclosed herein is provided.

The vehicle headlamp may comprise a housing in which the light module is accommodated. In general, such configurations and arrangements of a vehicle headlamp and a light module are well-known in the art, thus further detailed description thereof will be omitted for the sake of conciseness and readability of this specification.

It is to be understood that further preferred embodiments of the invention can also be any combination of features defined in the dependent claims with the features of the respective independent claim.

Furthermore, it is to be understood that a conjunction "and/or", if used herein in order to combine a first and a second feature, is to be construed as disclosing a first embodiment of the present invention that may comprise only the first feature, a second embodiment of the present invention that may comprise only the second feature, and a third embodiment of the present invention that may comprise both the first and second features.

Further advantageous embodiments are defined below.

BRIEF DESCRIPTION OF THE DRAWINGS

These and other aspects of the invention will be apparent from and elucidated with reference to the embodiments described hereinafter.

The invention will now be described, by way of example, based on embodiments with reference to the accompanying drawings.

In the drawings, schematically:

Fig. 1    illustrates a side view of an embodiment of an imaging lens according to the invention.

Fig. 2    shows a graph depicting part of an undulating curvature (waveform) defined by an exemplary embodiment of a correction polynomial according to the invention.

Fig. 3    illustrates a graph showing a light intensity distribution in a far field generated by the imaging lens of Fig. 1.

Fig. 4    depicts part of an undulating curvature (waveform) defined by another exemplary embodiment of a correction polynomial according to the invention.

Fig. 5    illustrates a side view of an embodiment of a light module according to the invention comprising the imaging lens of Fig. 1.

Fig. 6    illustrates a side view of an embodiment of a vehicle headlamp according to the invention comprising the light module of Fig. 5.

In the Figures, like numbers refer to like objects throughout. Objects in the Figures are not necessarily drawn to scale.

DETAILED DESCRIPTION OF THE EMBODIMENTS

Various embodiments of the invention will now be described by means of the Figures.

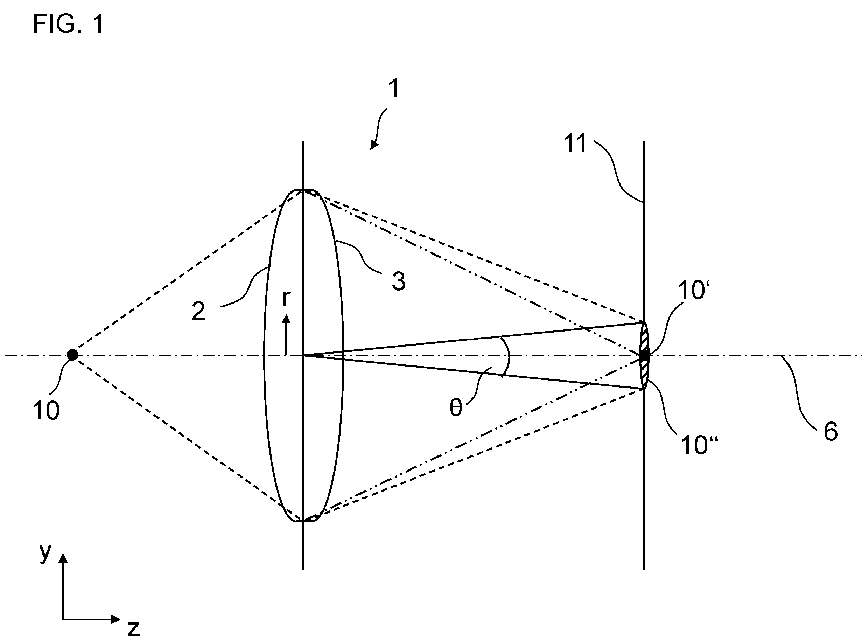

Fig. 1 illustrates a side view of an embodiment of an imaging lens 1 according to the invention. The imaging lens is intended for use in a light module of a (motor) vehicle headlamp, though not being limited thereto.

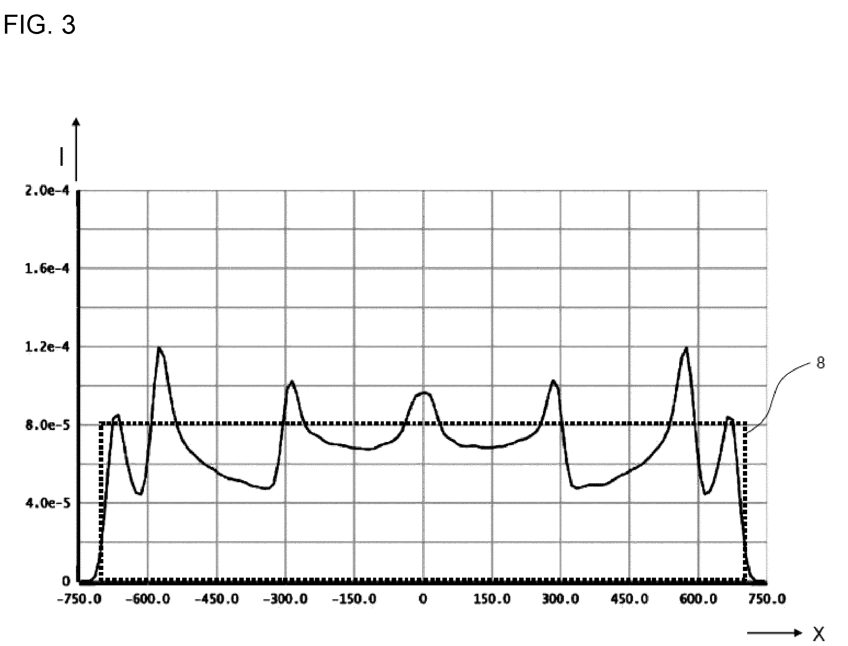

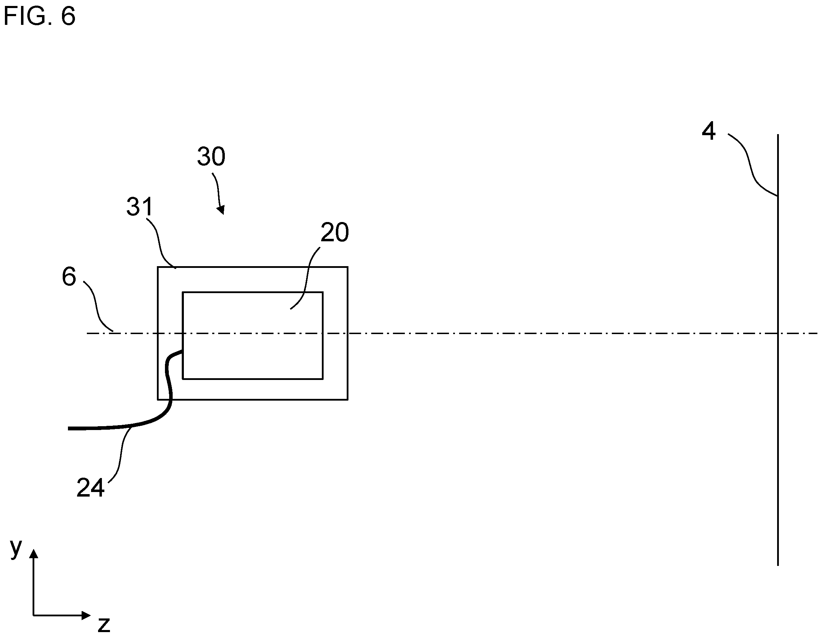

The imaging lens 1 of Fig. 1 comprises a light entry surface 2 and a light exit surface 3. It is to be understood that the light entry and exit surfaces 2, 3 are configured and arranged such that light entering the light entry surface 2 essentially from the left hand side of Fig. 1 will exit the light exit surface 3 of the imaging lens 1 essentially to the right hand side of Fig. 1 and will be projected to a far field 4 (cf. Fig. 6) in order to generate a predefined light intensity distribution I (cf. Fig. 3) in the far field 4.

Generally, one or more of the light entry surface 2 and the light exit surface 3 comprise an aspheric surface. In the presented embodiment of Fig. 1, only the light exit surface 3 comprises an aspheric surface. However, the invention is not limited thereto. An aspheric surface according to the teachings of the present invention may be provided as the light entry surface 2 of the imaging lens as well.

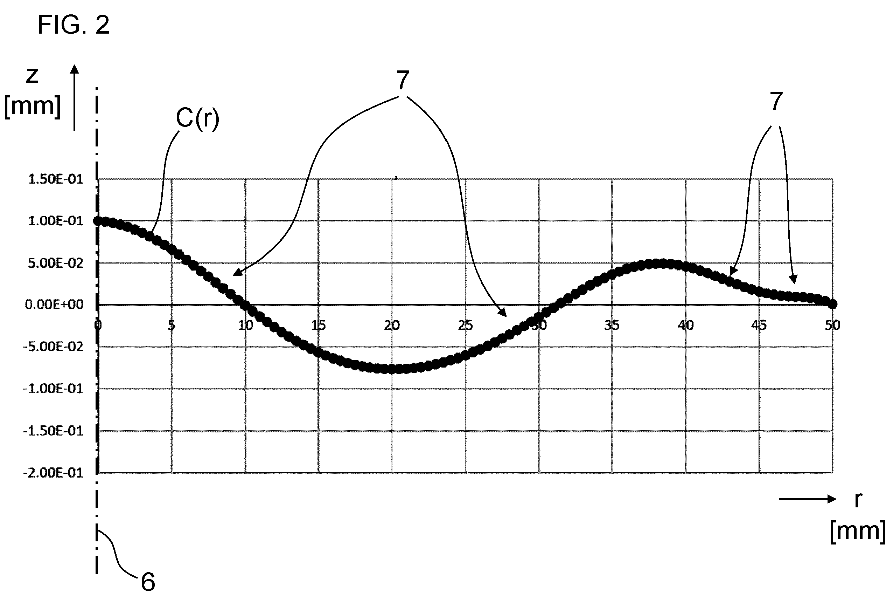

In any case, the one or two aspheric surfaces comprise a curvature which is defined by an overlay of a conic section, e.g. a parabola, plus at least one correction polynomial, e.g. $C(r)$ (cf. Fig. 2), of at least second order or higher. In the exemplary embodiment shown in Fig. 1, the correction polynomial $C(r)$ is a polynomial of 16-th order maximum, though not being limited thereto.

As may be best observed in Fig. 2, a graph depicting part of the undulating curvature (i.e. a *waveform*) defined/described by the exemplary correction polynomial $C(r)$ according to the embodiment of the imaging lens 1 of Fig. 1 is shown.

In Fig. 2, the correction polynomial is only drawn to the right hand side of an optical axis 6 (also shown in Fig. 1 and also referred to as an axis of rotation) since the depicted correction polynomial $C(r)$ only comprises even-numbered orders, e.g. orders of 2, 4, 6, etc., thus rendering it axisymmetric with regard to the optical axis 6. Hence, it is to be understood that towards the left hand side of the optical axis 6 the waveform of the correction polynomial $C(r)$ continues in a mirrored fashion with regard to the right hand side of Fig. 2 (the optical axis 6 being the "mirror"). The axisymmetric characteristic of the illustrated correction polynomial $C(r)$ facilitates the imaging lens 1 of Fig. 1 to be rotationally symmetrical and highly improves manufacturing ease and cost thereof since it can be conventionally machined, in particular, lathed.

Although the curvature of the correction polynomial $C(r)$ shown in Fig. 2 comprises at least four visible inflection points 7 (the locations of which are roughly indicated in Fig. 2 with respective arrows), it is to be understood that the overlay/combination of the elementary curvature, i.e. the conic section (e.g. a parabola), of the aspheric surface (in the present case the light exit surface 3) of the imaging lens 1 shown in Fig. 1 and the correction polynomial $C(r)$ shown in Fig. 2 results in an overall curvature of the aspheric surface 3 that does not have any inflection point, thus further improving manufacturing ease and cost of the imaging lens 1 according to the invention as already set forth above.

As further shown in Fig. 2, while a radius $r$ of the depicted correction polynomial $C(r)$ is in the range from 0 mm (i.e. the location of the optical/rotation axis) to 50 mm, the undulation maxima and minima are less than 2/10 mm peak-to-peak. In other words, the deviation/deformation of the elementary shape of the aspheric surface 3 introduced by the correction polynomial $C(r)$ is quite small compared to the radius r of the entire imaging lens 1. Therefore, the optical appearance of the light exit surface 3 of the imaging lens 1 according to the invention will not be affected by the curvature overlay of the correction polynomial $C(r)$, thus still facilitating a smooth and shiny aspheric surface 3 of the imaging lens 1.

As mentioned above, the exemplary correction polynomial $C(r)$ of the imaging lens 1 presented in Figs. 1 and 2, respectively, is a polynomial of 16-th order with only even-numbered orders (without being limited thereto), i.e.:

$$C(r) = c_2 r^2 + c_4 r^4 + c_6 r^6 + c_8 r^8 + c_{10} r^{10} + c_{12} r^{12} + c_{14} r^{14} + c_{16} r^{16}$$

Optimized for an exemplary aspheric surface 3 having a diameter of *100 mm* (cf. Fig. 2), a blur angle of $\theta = 0.78°$, and a refractive index of the lens material being used (e.g. PMMA) of *n = 1.492*, the coefficients for the correction polynomial $C(r)$ shown in Fig. 2 were found to be:

| | |
|---|---|
| $c_2$: | *1.2443E-03* |
| $c_4$: | *-3.5252E-06* |
| $c_6$: | *5.6543E-09* |
| $c_8$: | *-6.0326E-12* |
| $c_{10}$: | *4.0417E-15* |
| $c_{12}$: | *-1.5777E-18* |
| $c_{14}$: | *3.2467E-22* |
| $c_{16}$: | *-2.7111E-26* |

As already mentioned herein, rescaling of the above-given coefficients for the correction polynomial $C(r)$ in order to adapt the polynomial to an imaging lens having another diameter, another blur angle and/or another refractive index may be achieved using only basic arithmetic operations as long as the blur angle $\theta$ remains within the preferred range from 0.5° to 3°.

Furthermore, as already explained above in the general section of this specification, it is to be emphasized that the overall aspheric surface 3 may be the overlay of the conic section plus the correction polynomial $C$, and may further comprise an additional polynomial $P$, the latter being part of the definition of a (conventional) elementary form of the aspheric surface in combination with the conic section, and the correction polynomial $C$ being for providing the imaging lens 1 with the well-defined blur angle $\theta$ according to the invention as described herein.

Referring again to Fig. 1, a blur angle $\theta$ is illustrated being provided by the imaging lens 1 due to the above-described curvature of the aspheric surface 3 (in the present case only the light exit surface 3). In order to further enlighten the definition of the blur angle $\theta$ of the imaging lens 1 according to the invention, if an object 10, e.g. a light source, LED or the like, is going to be imaged by a conventional lens (not shown), which may be an aspheric lens without having the curvature as described herein according to the invention, the object 10 may be imaged accurately and precisely as an imaged object 10' in an imaging plane 11 (e.g. a focal plane) of the conventional imaging lens, for example.

However, since the imaging lens 1 according to the invention provides the blur angle $\theta$, the image of the object 10 will become a blurred image 10" of the object 10 having a well-defined blur diameter in the imaging plane 11 (i.e. at the same distance from the light exit surface 3 as in the case of the conventional imaging lens).

Preferably, the aspheric surface according to the invention (i.e. the light exit surface 3 in the present case) defines a blur angle $\theta$ being in the range from 0.5° to 3°.

Fig. 3 illustrates a graph showing a light intensity distribution $I$ in the far field 4 generated by the imaging lens 1 of Fig. 1. If, for example, an LED light source comprising a plurality of individual LEDs is used to generate light that is to be projected to the far field 4 by the imaging lens 1 of Fig. 1, the blurring of the imaged individual LEDs in the far field 4 due to the blur angle $\theta$ provided by the imaging lens 1 may yield the light intensity distribution $I$ shown in Fig. 3. Clearly, the intensity drops between individual intensity peaks are mitigated by the well-defined blur (blur angle $\theta$ being provided by the imaging lens 1) of the individual imaged LEDs, thus rendering the light intensity distribution $I$ in the far field 4 essentially homogeneous as shown in Fig. 3. Moreover, with the imaging lens according to the invention, a light intensity distribution $I$ is achievable having an almost rectangular shape 8 and an average value of approximately $8.0\ e^{-5}$ as indicated in Fig. 3, thus being very homogeneous.

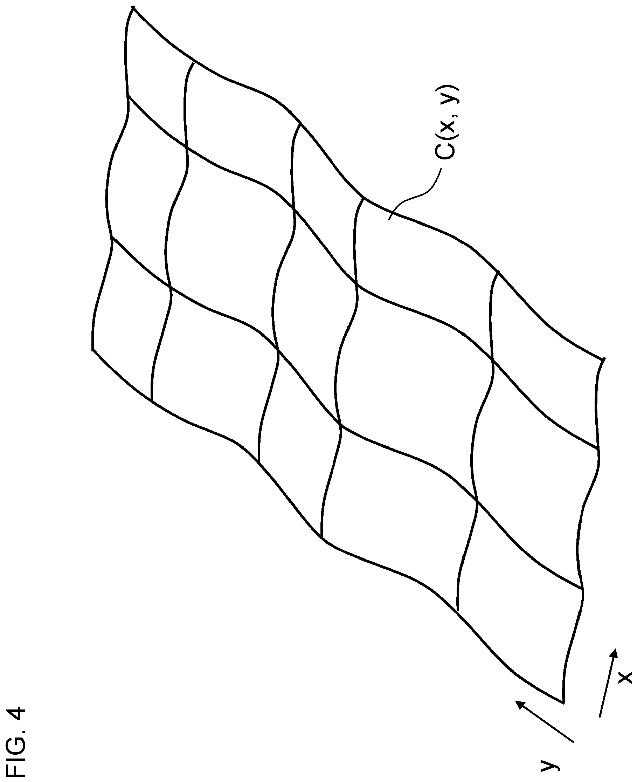

Fig. 4 depicts part of an undulating curvature (waveform) defined by another exemplary embodiment of a correction polynomial $C(x, y)$ according to the invention. In contrast to the correction polynomial $C(r)$ shown in Fig. 2, the correction polynomial $C(x, y)$ defines the undulation of an aspheric surface (not shown) which is a non-rotationally symmetrical surface. Rather, the undulation of such a non-rotationally symmetrical aspheric surface is defined by the overlay of the elementary conic section, e.g. a parabola, plus two correction polynomials, one of which is a function of a first spatial direction $x$ (e.g. a horizontal spatial direction) and the other one is a function of a second spatial direction *y* (e.g. a vertical spatial direction), the second direction being perpendicular to the first spatial direction *x*, and with both directions *x* and *y* being perpendicular to the direction *z* along the optical axis 6.

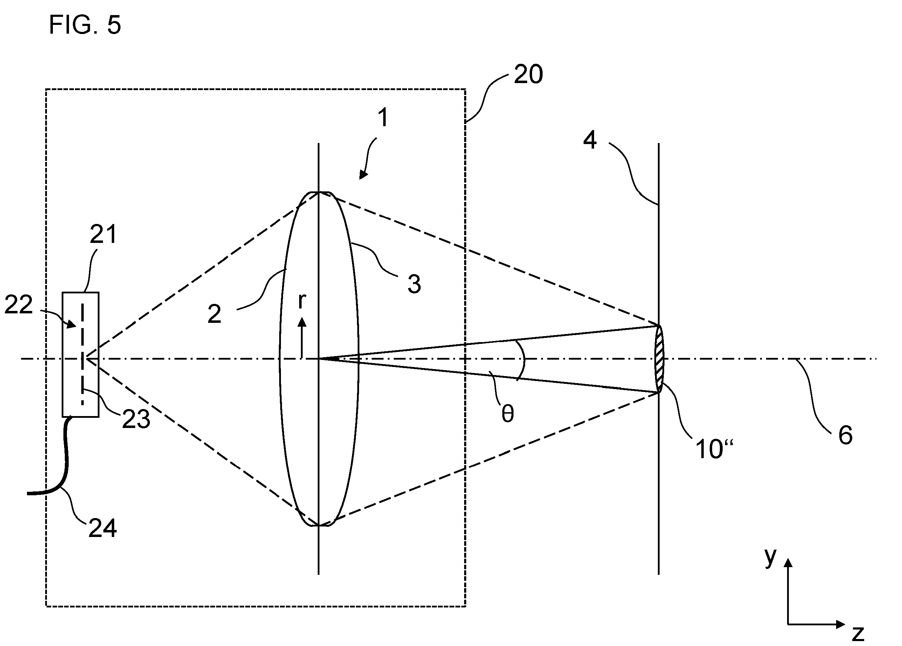

Fig. 5 schematically illustrates a side view of an embodiment of a light module 20 for a vehicle headlamp (cf. Fig. 6) according to the invention comprising the imaging lens 1 of Fig. 1. The light module 20 comprises an LED light source 21 for generating light, wherein the LED light source 21 comprises an LED array 22 having a plurality of LEDs 23. In the present case, the LED array 22 is configured as an LED matrix comprising several rows with each row having a plurality of individual LEDs 23 arranged therein.

As depicted in Fig. 5, the light module 20 comprises at least one imaging lens 1 as shown in Fig. 1, for example. The imaging lens 1 is arranged such that the light generated by the plurality of individual LEDs 23 is projected to the far field 4. In other words, the imaging lens 1 generates an image of the plurality of individual LEDs 23 in the far field 4. To this end, the light entry surface 2 faces the LED light source 21 and the light exit surface 3 of the imaging lens 1 is oriented towards the far field 4.

Furthermore, the LED light source 21 may be supplied by electrical power, e.g. via an electric cable 24 which in turn may be connected to an electrical energy source (not shown) and/or an electric control unit (also not shown), respectively.

Fig. 6 schematically illustrates a side view of an embodiment of a vehicle headlamp 30 according to the invention comprising the light module 20 of Fig. 5. In the embodiment shown in Fig. 6, the light module 20 is accommodated within a housing 31 of the vehicle headlamp 30.

While the invention has been illustrated and described in detail in the drawings and the foregoing description, such illustration and description are to be considered illustrative or exemplary and not restrictive.

From reading the present disclosure, other modifications will be apparent to persons skilled in the art. Such modifications may involve other features which are already known in the art and which may be used instead of or in addition to features already described herein.

Variations to the disclosed embodiments can be understood and effected by those skilled in the art, from a study of the drawings, the disclosure and the appended claims. In the claims, the word "comprising" does not exclude other elements or steps, and the indefinite article "a" or "an" does not exclude a plurality of elements or steps. The mere fact that certain measures are recited in mutually different dependent claims does not indicate that a combination of these measures cannot be used to advantage.

Any reference signs in the claims should not be construed as limiting the scope thereof.

REFERENCE SIGNS:

| | |
|---|---|
| 1 | Imaging lens |
| 2 | Light entry surface |
| 3 | Light exit surface |
| 4 | Far field |
| 6 | Optical axis |
| 7 | Inflection point |
| 8 | Rectangular light intensity distribution |
| 10 | Object to be imaged, e.g., light source |
| 10' | Sharp image of 10 |
| 10" | Blurred image of 10 |
| 11 | Imaging plane |
| 20 | Light module |
| 21 | LED light source |
| 22 | LED array |
| 23 | LED |
| 24 | Electrical cable |
| 30 | Vehicle headlamp |
| 31 | Housing |
| $\theta$ | Blur angle |
| $a_i$ | I-th coefficient of additional polynomial |
| $C(r)$ | Correction polynomial |
| $C(x, y)$ | Correction polynomial |
| $c_i$ | I-th coefficient of correction polynomial |
| I | Light intensity |

| P(x) | Additional polynomial |
|---|---|
| Q(x) | Combined polynomial |
| r | Radius |
| x | First spatial direction (lateral/width direction) |
| y | Second spatial direction (height direction) |
| z | Third spatial direction (longitudinal direction) |

**Claims**

1.  An imaging lens (1) for use in a light module (20) for a vehicle headlamp (30), comprising

    a light entry surface (2) and
    a light exit surface (3),
    the light entry and exit surfaces (2, 3) being configured and arranged to project light entering the light entry surface (2) and exiting the light exit surface (3) to a far field (4) in order to generate a predefined light intensity distribution (I) in the far field (4),
    wherein one or more of the light entry surface (2) and the light exit surface (3) comprise an aspheric surface (3) which curvature is defined by an overlay of a conic section plus at least one correction polynomial (C(r), C(x, y)) of at least second order or higher,
    **characterized in that**,
    the correction polynomial (C(r), C(x, y)) describes a waveform,
    wherein the waveform is a continuous waveform having at least one inflection point, and
    wherein at the inflection point the polynomial correction changes its curvature from convex to concave, or vice versa.

2.  The imaging lens (1) as claimed in claim 1, wherein the overlay to define the curvature of the aspheric surface (3) comprises an additional polynomial (P(r), P(x, y)) besides the conic section and the at least one correction polynomial (C(r), C(x, y)).

3.  The imaging lens (1) as claimed in claim 1, wherein the correction polynomial (C(r), C(x, y)) only comprises even-numbered orders.

4.  The imaging lens (1) as claimed in claim 1, wherein the curvature of the aspheric surface (3) does not have any inflection point (7).

5.  The imaging lens (1) as claimed in claim 1, wherein the aspheric surface (3) defines a blur angle (θ) being in the range from 0.5° to 3°.

6.  The imaging lens (1) as claimed in claim 1, wherein the aspheric surface (3) is a rotationally symmetrical surface which curvature is defined by the overlay of the conic section plus one correction polynomial (C(r)) being a function of a single variable (r) of the respective one or more of the light entry surface (2) and the light exit surface (3).

7.  The imaging lens (1) as claimed in claim 1, wherein the aspheric surface is a non-rotationally symmetrical surface which curvature is defined by the overlay of the conic section plus two correction polynomials (C(x, y)), one of which is a function of a first spatial direction (x) and the other one is a function of a second spatial direction (y), the second spatial direction (y) being perpendicular to the first spatial direction (x).

8.  The imaging lens (1) as claimed in claim 1, wherein the maximum order of the correction polynomial (C(r), C(x, y)) is 16.

9.  A light module (20) for a vehicle headlamp (30), comprising

    an LED light source (21) for generating light,
    the LED light source (21) comprising an LED array (22) having a plurality of LEDs (23), and
    at least one imaging lens (1) being configured and arranged to generate an image of the plurality of LEDs (23) in a far field (4) of the light generated by the LED light source (21),
    wherein the imaging lens (1) is configured according to any of the claims 1 to 8 and having its light entry surface (2) being oriented towards the LED light source (21) and its light exit surface (3) being oriented towards the far field (4).

10. The light module (20) as claimed in claim 9, wherein the LED array (22) is in the form of an LED matrix comprising a plurality of adjoining LED rows with each LED row having a plurality of adjoining LEDs (23) arranged therein.

11. A vehicle headlamp (30) comprising a light module (20) according to claim 9 or 10.


**Patentansprüche**

1. Abbildungslinse (1) zur Verwendung in einem Lichtmodul (20) für einen Fahrzeugscheinwerfer (30), umfassend

   eine Lichteintrittsfläche (2) und
   eine Lichtaustrittsfläche (3),
   wobei die Lichteintritts- und Lichtaustrittsflächen (2, 3) dazu eingerichtet und angeordnet sind, Licht, dass in die Lichteintrittsfläche (2) eintritt und aus der Lichtaustrittsfläche (3) austritt, in ein Fernfeld (4) zu projizieren, um eine vordefinierte Lichtintensitätsverteilung (I) in dem Fernfeld (4) zu erzeugen, wobei eine oder mehrere der Lichteintrittsfläche (2) und der Lichtaustrittsfläche (3) eine asphärische Fläche (3) umfassen, deren Krümmung durch eine Überlagerung eines Kegelschnitts plus mindestens einem Korrekturpolynom (C(r), C(x, y)) mindestens zweiter Ordnung oder höher definiert ist,
   **dadurch gekennzeichnet, dass**
   das Korrekturpolynom (C(r), C(x, y)) eine Wellenform beschreibt,
   wobei die Wellenform eine kontinuierliche Wellenform mit mindestens einem Wendepunkt ist, und
   wobei die Polynomkorrektur an dem Wendepunkt ihre Krümmung von konvex zu konkav oder umgekehrt ändert.

2. Abbildungslinse (1) nach Anspruch 1, wobei die Überlagerung zum Definieren der Krümmung der asphärischen Fläche (3) neben dem Kegelschnitt und dem mindestens einen Korrekturpolynom (C(r), C(x,y)) ein zusätzliches Polynom (P(r), P(x,y)) umfasst.

3. Abbildungslinse (1) nach Anspruch 1, wobei das Korrekturpolynom (C(r), C(x, y)) nur geradzahlige Ordnungen umfasst.

4. Abbildungslinse (1) nach Anspruch 1, wobei die Krümmung der asphärischen Fläche (3) keinen Wendepunkt (7) aufweist.

5. Abbildungslinse (1) nach Anspruch 1, wobei die asphärische Fläche (3) einen Unschärfewinkel (Θ) im Bereich von 0,5° bis 3° definiert.

6. Abbildungslinse (1) nach Anspruch 1, wobei die asphärische Fläche (3) eine rotationssymmetrische Fläche ist, deren Krümmung durch die Überlagerung des Kegelschnitts plus einem Korrekturpolynom (C(r)) definiert ist, das eine Funktion einer einzelnen Variablen (r) der jeweiligen einen oder mehreren der Lichteintrittsfläche (2) und der Lichtaustrittsfläche (3) ist.

7. Abbildungslinse (1) nach Anspruch 1, wobei die asphärische Fläche eine nichtrotationssymmetrische Fläche ist, deren Krümmung durch die Überlagerung des Kegelschnitts plus zwei Korrekturpolynome (C(x, y)) definiert ist, von denen eines eine Funktion einer ersten Raumrichtung (x) und das andere eine Funktion einer zweiten Raumrichtung (y) ist, wobei die zweite Raumrichtung (y) senkrecht zu der ersten Raumrichtung (x) ist.

8. Abbildungslinse (1) nach Anspruch 1, wobei die maximale Ordnung des Korrekturpolynoms (C(r), C(x, y)) 16 ist.

9. Lichtmodul (20) für einen Fahrzeugscheinwerfer (30), umfassend

   eine LED-Lichtquelle (21) zum Erzeugen von Licht,
   wobei die LED-Lichtquelle (21) ein LED-Array (22) mit einer Vielzahl von LEDs (23) umfasst, und
   mindestens eine Abbildungslinse (1), die dazu eingerichtet und angeordnet ist, ein Bild der Vielzahl von LEDs (23) in einem Fernfeld (4) des von der LED-Lichtquelle (21) erzeugten Lichts zu erzeugen,
   wobei die Abbildungslinse (1) nach einem der Ansprüche 1 bis 8 ausgebildet ist und ihre Lichteintrittsfläche (2) auf die LED-Lichtquelle (21) ausgerichtet hat und ihre Lichtaustrittsfläche (3) auf das Fernfeld (4) ausgerichtet hat.

**10.** Lichtmodul (20) nach Anspruch 9, wobei das LED-Array (22) in Form einer LED-Matrix vorliegt, die mehrere nebeneinanderliegende LED-Reihen umfasst, wobei jede LED-Reihe mehrere darin angeordnete nebeneinanderliegende LEDs (23) aufweist.

**11.** Fahrzeugscheinwerfer (30) umfassend ein Lichtmodul (20) nach Anspruch 9 oder 10.

**Revendications**

**1.** Lentille d'imagerie (1) destinée à être utilisée dans un module d'éclairage (20) pour un phare de véhicule (30), comprenant

une surface d'entrée de lumière (2) et
une surface de sortie de lumière (3),
les surfaces d'entrée et de sortie de lumière (2, 3) étant configurées et agencées pour projeter la lumière entrant dans la surface d'entrée de lumière (2) et sortant de la surface de sortie de lumière (3) vers un champ lointain (4) afin de générer une distribution de l'intensité lumineuse prédéfinie (I) dans le champ lointain (4),
dans lequel une ou plusieurs surfaces parmi la surface d'entrée de lumière (2) et la surface de sortie de lumière (3) comprennent une surface asphérique (3) dont la courbure est définie par une superposition d'une section conique plus au moins un polynôme de correction (C(r), C(x, y)) au moins de second ordre ou supérieur, **caractérisé en ce que**,
le polynôme de correction (C(r), C(x, y)) décrit une forme d'onde,
dans lequel la forme d'onde est une forme d'onde continue ayant au moins un point d'inflexion, et
dans lequel au point d'inflexion la correction polynomiale change sa courbure de convexe à concave, ou vice versa.

**2.** Lentille d'imagerie (1) selon la revendication 1, dans laquelle la superposition pour définir la courbure de la surface asphérique (3) comprend un polynôme supplémentaire (P(r), P(x, y)) en plus de la section conique et dudit au moins un polynôme de correction (C(r), C(x, y)).

**3.** Lentille d'imagerie (1) selon la revendication 1, dans laquelle le polynôme de correction (C(r), C(x, y)) ne comprend que des ordres pairs.

**4.** Lentille d'imagerie (1) selon la revendication 1, dans laquelle la courbure de la surface asphérique (3) ne présente pas de point d'inflexion (7).

**5.** Lentille d'imagerie (1) selon la revendication 1, dans laquelle la surface asphérique (3) définit un angle de flou (8) compris entre 0,5° et 3°.

**6.** Lentille d'imagerie (1) selon la revendication 1, dans laquelle la surface asphérique (3) est une surface symétrique en rotation dont la courbure est définie par la superposition de la section conique plus un polynôme de correction (C(r)) étant une fonction d'une seule variable (r) desdites une ou plusieurs surfaces respectives parmi la surface d'entrée de lumière (2) et la surface de sortie de lumière (3).

**7.** Lentille d'imagerie (1) selon la revendication 1, dans laquelle la surface asphérique est une surface non symétrique en rotation dont la courbure est définie par la superposition de la section conique plus deux polynômes de correction (C(x, y)), dont l'un est une fonction d'une première direction spatiale (x) et l'autre est une fonction d'une seconde direction spatiale (y), la seconde direction spatiale (y) étant perpendiculaire à la première direction spatiale (x).

**8.** Lentille d'imagerie (1) selon l'une des revendications 1 à 7, **caractérisée en ce que** l'ordre maximum du polynôme de correction (C(r), C(x, y)) est 16.

**9.** Module d'éclairage (20) pour un phare de véhicule (30), comprenant une source lumineuse à LED (21) pour générer de la lumière,

la source lumineuse à LED (21) comprenant un réseau de LED (22) ayant une pluralité de LED (23), et

au moins une lentille d'imagerie (1) étant configurée et agencée pour générer une image de la pluralité de LED (23) dans un champ lointain (4) de la lumière générée par la source de lumière LED (21), dans laquelle la lentille d'imagerie (1) est configuré selon l'une quelconque des revendications 1 à 8 et ayant sa surface d'entrée de lumière (2) qui est orientée vers la source de lumière LED (21) et sa surface de sortie de lumière (3) qui est orientée vers le champ lointain (4).

10. Module d'éclairage (20) selon la revendication 9, dans lequel le réseau de LED (22) est sous la forme d'une matrice de LED comprenant une pluralité de rangées de LED adjacentes, chaque rangée de LED ayant une pluralité de LED adjacentes (23) agencées à l'intérieur.

11. Projecteur de véhicule (30) comprenant un module d'éclairage (20) selon la revendication 9 ou 10.

FIG. 1

FIG. 2

$z$
[mm]

1.50E-01
1.00E-01
5.00E-02
0.00E+00
-5.00E-02
-1.00E-01
-1.50E-01
-2.00E-01

0  5  10  15  20  25  30  35  40  45  50

$r$
[mm]

C(r)

7

6

FIG. 3

EP 3 862 623 B1

FIG. 4

y

x

C(x, y)

FIG. 5

EP 3 862 623 B1

FIG. 6

**EP 3 862 623 B1**

## REFERENCES CITED IN THE DESCRIPTION

### Patent documents cited in the description

- US 9476558 B2
- US 20160025290 A